# EUROPEAN PATENT SPECIFICATION

(11) **EP 4 282 244 B1**
(45) Date of publication and mention of the grant of the patent: **01.07.2026**
(21) Application number: 23175004.3
(22) Date of filing: 24.05.2023
(51) Int. Cl.: A01D 34/00, A01D 34/74

(54) **BLADE HEIGHT ADJUSTMENT MECHANISM FOR A LAWN MOWER AND LAWN MOWER COMPRISING THE SAME**
MECHANISMUS ZUR HÖHENVERSTELLUNG DES MESSERS FÜR EINEN RASENMÄHER UND EINEN RASENMÄHER DER DIESEN UMFASST
MÉCANISME DE RÉGLAGE DE LA HAUTEUR DE LAME POUR TONDEUSE À GAZON ET TONDEUSE À GAZON COMPRENANT LE TEL

(30) Priority: 25.05.2022 US 202263345753 P
(43) Date of publication of application: 29.11.2023
(73) Proprietor: Techtronic Cordless GP, Anderson, SC 29621 (US)
(72) Inventor: LAI, Hok Sum Sam, Kwai Chung (HK); CHOI, Man Ho, Kwai Chung (HK); NG, Ho Lam, Kwai Chung (HK)
(74) Representative: Zimmermann & Partner Patentanwälte mbB

(56) References cited:
- EP-A1- 3 183 949
- WO-A1-2014/007696
- US-A1- 2020 170 186

## Description

### CROSS-REFERENCE TO RELATED APPLICATIONS

### BACKGROUND

The present disclosure relates to a robotic garden tool, such as a robotic lawn mower, having a movable implement for performing a garden operation such as cutting grass or other plants. For example, patent application number US 2020/170186 A1 describes an autonomous vehicle (e.g. mower) which includes two or more wheels supporting a chassis upon a ground surface as well as a cutting frame which is movable, relative to the chassis, to allow adjustment of a height-of-cut of the cutting blade relative to the ground surface. As a further example, patent application number WO 2014/007696 A1 describes a robotic mower which may include a chassis, a cutting motor driving at least one cutting blade, and a height adjustment assembly.

### SUMMARY

In one aspect of the present invention a blade height adjustment in accordance with claim 1 is suggested, the blade height adjustment mechanism for use with a lawn mower having a deck and a blade. The blade height adjustment mechanism has an actuator and a biasing member. The actuator is configured to adjust a height of the blade with respect to the deck in a height adjustment direction. The biasing member is configured to provide a force for supporting the blade. The force defines an axis that is transverse to the height adjustment direction. The blade height adjustment mechanism has a mount configured to support the blade, the mount and the blade configured to be adjustable with respect to the deck in the height adjustment direction. The blade height adjustment mechanism has a mechanical linkage operatively disposed between the deck and the mount. The mechanical linkage has a translatable yoke operatively coupled to the biasing member, a pivotable first linkage coupled to the mount, and a pivotable second linkage coupled to the first linkage and the yoke.

Further preferred embodiments are defined by the dependend claims.

Other aspects of the disclosure will become apparent by consideration of the detailed description and accompanying drawings.

### BRIEF DESCRIPTION OF THE DRAWINGS

Fig. 1 is a top perspective view of an autonomous lawn mower embodying the disclosure.
Fig. 2, a non-claimed example useful for understanding the invention, is a cross-sectional view of the autonomous lawn mower of Fig. 1 taken through line 2-2 in Fig. 1.
Fig. 3, a non-claimed example useful for understanding the invention, is a perspective view of a height adjustment mechanism of the autonomous lawn mower of Fig. 1.
Fig. 4, a non-claimed example useful for understanding the invention, is a bottom perspective view of a manual actuator and cam surface of the autonomous lawn mower of Fig. 1.
Fig. 5, a non-claimed example useful for understanding the invention, is the same bottom perspective view of the manual actuator and cam surface of Fig. 3 but further illustrating a cylindrical volume.
Fig. 6, a non-claimed example useful for understanding the invention, is a perspective view of a portion of the height adjustment mechanism of Fig. 5.
Fig. 7, a non-claimed example useful for understanding the invention, is a perspective view of the height adjustment mechanism of Fig. 5 in a raised position.
Fig. 8, a non-claimed example useful for understanding the invention, is a perspective view of the height adjustment mechanism of Fig. 5 in a lowered position.
Fig. 9, a non-claimed example useful for understanding the invention, is a perspective view of another implementation of a height adjustment mechanism for the autonomous lawn mower of Fig. 1.
Fig. 10 is a perspective view of a height adjustment mechanism in accordance with the invention for the autonomous lawn mower of Fig. 1.
Fig. 11 is a side view of the height adjustment mechanism of Fig. 10 in a raised position.
Fig. 12 is a side view of the height adjustment mechanism of Fig 10. in a lowered position.
Fig. 13A, a non-claimed example useful for understanding the invention, is a perspective view of another height adjust mechanism including a bevel gear and a helical rack.
Fig. 13B, a non-claimed example useful for understanding the invention, is a perspective view of another height adjustment mechanism including a circular gear and a linear rack.
Fig. 14A, a non-claimed example useful for understanding the invention, is a top perspective view of another height adjustment mechanism in a first position and having a guard shown as transparent for illustrative purposes.
Fig. 14B, a non-claimed example useful for understanding the invention, is a top perspective view of the height adjustment mechanism of Fig. 14A in a second position.
Fig. 14C, a non-claimed example useful for understanding the invention, is a bottom perspective exploded view of a portion of the height adjustment mechanism of Fig. 14A.
Fig. 14D, a non-claimed example useful for understanding the invention, is a top perspective view of the portion of the height adjustment mechanism of Fig. 14C
Fig. 14E, a non-claimed example useful for understanding the invention, is a top perspective view of the portion of the height adjustment mechanism of Fig. 14D.
Fig. 15A, a non-claimed example useful for understanding the invention, is an exploded view of another height adjustment mechanism.
Fig. 15B, a non-claimed example useful for understanding the invention, is a cross-sectional view of the height adjustment mechanism of Fig. 15A in a raised position.
Fig. 15C, a non-claimed example useful for understanding the invention, is a cross-sectional view of the height adjustment mechanism of Fig. 15A in a lowered position.

### DETAILED DESCRIPTION

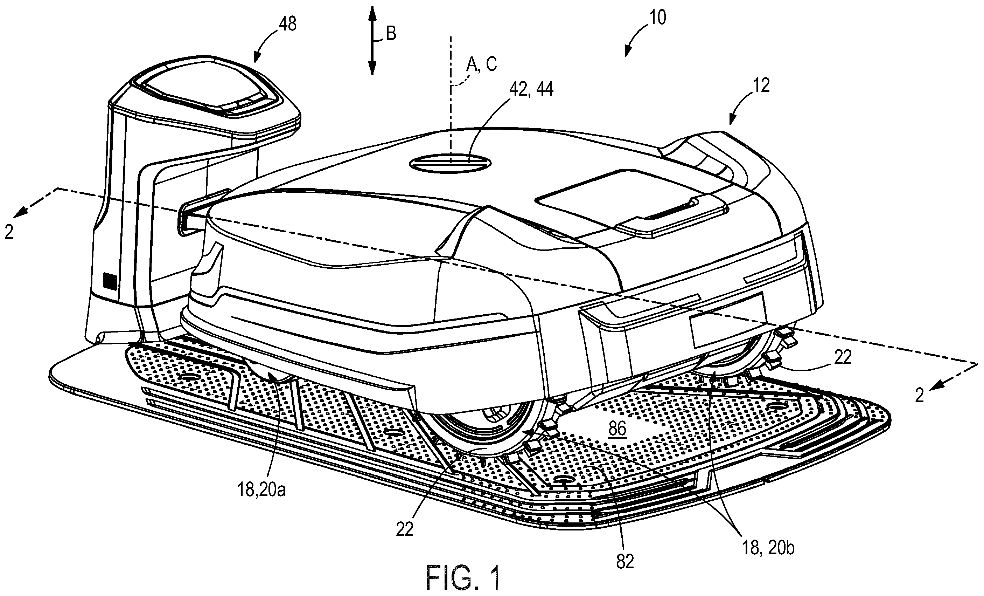

Figs. 1-2 illustrate a garden tool system 10. For example, the garden tool system 10 may include a garden tool 12, such as a lawn mower 12 (as shown), or in other implementations may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the garden tool 12 may include a vacuum cleaner, a trimmer, a string trimmer, a hedge trimmer, a sweeper, a cutter, a plow, a blower, a snow blower, etc. In the illustrated implementation, the garden tool system 10 includes the lawn mower 12 and a charging station 48. The garden tool 12 may be autonomous, semi-autonomous, or not autonomous.

For example, the lawn mower may include a controller (not shown) having a programmable processor (e.g., a microprocessor, a microcontroller, or another suitable programmable device), a memory, and a human-machine interface. The memory may include, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, electronic memory devices, or other data structures. The controller may also, or alternatively, include integrated circuits and/or analog devices, e.g., transistors, comparators, operational amplifiers, etc., to execute the logic and control signals described herein. The controller includes a plurality of inputs and outputs to and from various components of the lawn mower. The controller is configured to provide control signals to the outputs and to receive data and/or signals (e.g., sensor data, user input signals, etc.) from the inputs. The inputs and outputs are in communication with the controller, e.g., by way of hard-wired and/or wireless communications such as by satellite, internet, mobile telecommunications technology, a frequency, a wavelength, Bluetooth^{®}, or the like. The controller may include a navigation system, which may include one or more of a global positioning system (GPS), beacons, sensors such as image sensors, ultrasonic sensors, wire sensors, and an algorithm for navigating an area to be mowed. However, in other implementations, the lawn mower may be non-autonomous.

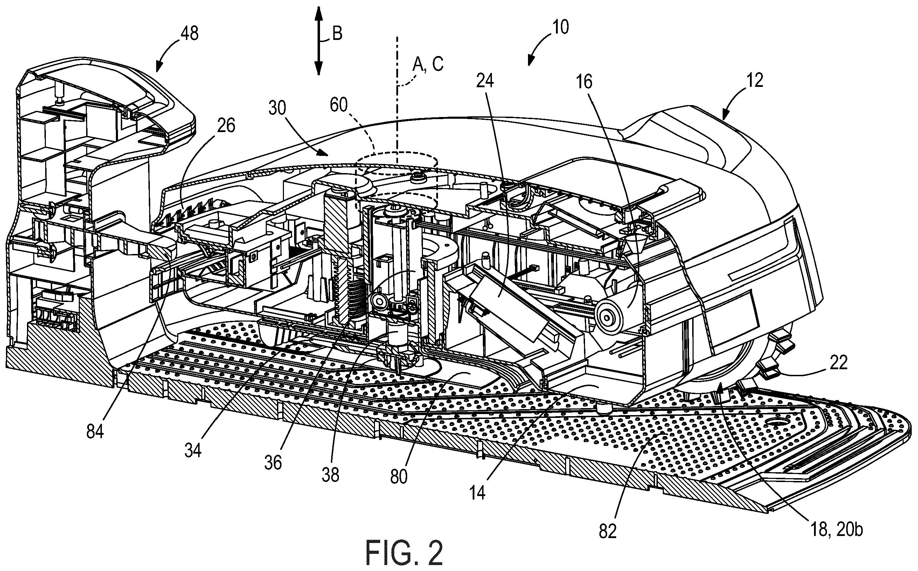

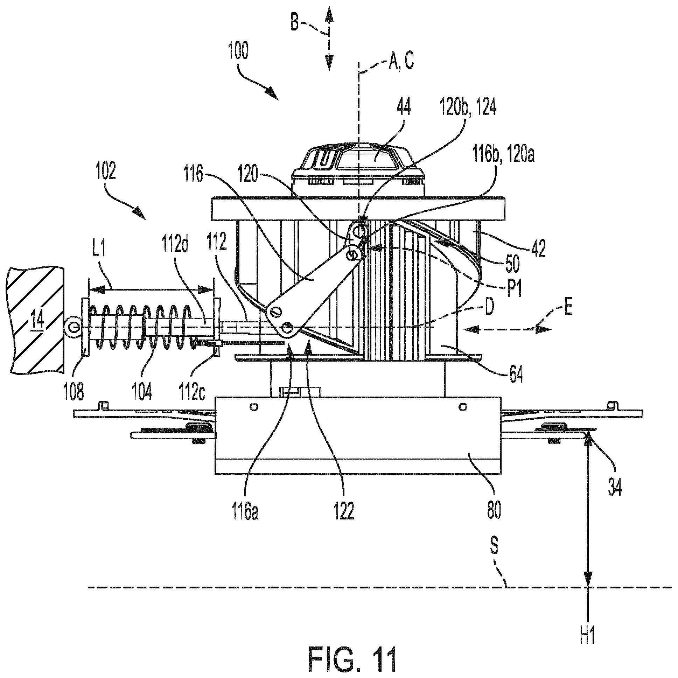

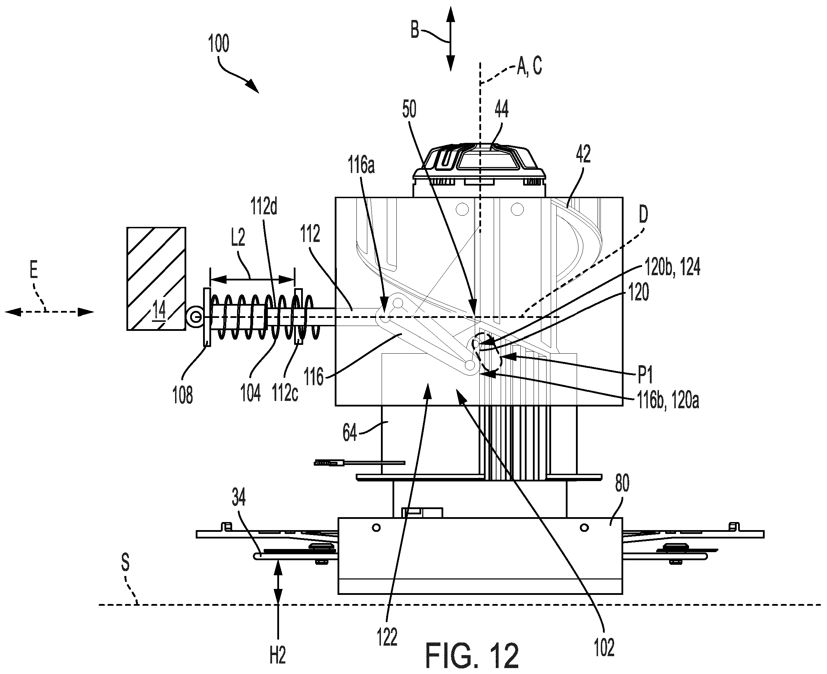

With reference to Fig. 2, the lawn mower 12 includes a deck 14 for supporting various components of the lawn mower 12, as will be described in greater detail below. The lawn mower 12 includes at least one prime mover 16 for providing tractive effort to move the lawn mower 12 across a support surface S (Figs. 11, 12), such as the charging station 48 or a lawn to be mowed. The at least one prime mover 16 may be supported by the deck 14. For example, the at least one prime mover 16 may include one or more electric motors 16 in the illustrated implementation. However, in other implementations the prime mover 16 may include another type of motor, a gasoline engine, or the like, in any suitable quantity and combination.

The lawn mower 12 also includes a plurality of wheels 18 (Fig. 1), which may be supported by the deck 14 (Fig. 2), for converting the tractive effort into motion of the lawn mower 12 on the support surface. Each of the plurality of wheels 18 supports a tire 22 in the illustrated implementation. However, the plurality of wheels 18 may support any combination of one or more of tires, continuous tracks, or the like in other implementations. The plurality of wheels 18 includes two front wheels 20a and two rear wheels 20b, but other quantities of wheels may be employed in other implementations. In the illustrated implementation, the at least one prime mover 16 includes one of the one or more electric motors dedicated for each of the two rear wheels 20b to apply torque thereto, and the two front wheels 20a are not driven. However, other torque-transmission arrangements can be used in other implementations with any quantity and combination of driven and non-driven wheels, any number of wheels being driven by a single prime mover, and any number of prime movers.

The lawn mower 12 includes a power source 24 (Fig. 2), such as a battery, for powering the at least one prime mover 16 such that the lawn mower 12 can perform a lawn mowing operation in a cordless fashion. The power source 24 may include a lithium-ion battery, and/or other battery chemistries. The power source 24 may be removable from the lawn mower 12. In other implementations, the at least one prime mover 16 may be powered by other power sources, such as solar panels, fuel cells, compressed fluid, fuel, or the like. The lawn mower 12 includes a battery charging contact 26 for receiving a charge from an external power source (not shown) for charging the power source 24.

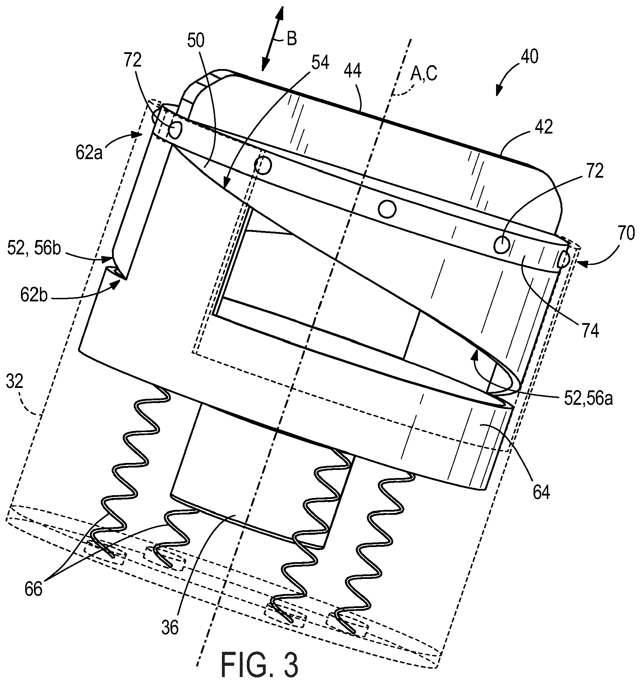

The lawn mower 12 includes a cutting module 30 (some of which is illustrated in Fig. 2 and some of which is illustrated in Figs. 3-8, as will be described below), which may be supported by the deck 14. As best illustrated in Fig. 3, the cutting module 30 includes a cutting module mount 32 fixed with respect to the deck 14 or formed as part of the deck 14. With reference to Fig. 2, the cutting module 30 also includes a blade 34 and a motor 36 configured to move the blade 34 about an axis of rotation A. In the illustrated implementation, the blade 34 is a lawn mower blade; however, in other implementations, the blade 34 includes a reciprocal trimming unit (not shown) having linearly reciprocating trimming blades, and the motor 36 drives the trimming blades of the trimming unit to move reciprocally (i.e., in opposing clockwise and counter clockwise directions about the axis of rotation A). In yet other implementations, the blade 34 includes a string (not shown), as in a string trimmer, and the motor 36 drives the string about the axis of rotation A. In yet other implementations, the blade 34 includes a roller blade (not shown), such as a reel blade or squirrel cage blade, and the motor 36 drives the roller blade to roll or rotate about an axis that is generally parallel with the support surface (e.g., generally horizontal). In yet other implementations, the blade 34 includes an auger (not shown), such as snow blower auger, and the motor 36 drives the auger to roll or rotate about an axis that is generally parallel with the support surface (e.g., generally horizontal). In yet other implementations, the blade 34 includes a fan (not shown), such as a blower fan, and the motor 36 drives the fan in rotation. Other types of blades are also possible. Furthermore, other types of driven implements are also possible, including the blades described above as well as other non-blade implements that are driven by the motor 36.

The motor 36 includes a rotatable drive shaft 38 (Fig. 2) operably coupled to the blade 34. In the illustrated implementation, the drive shaft 38 is disposed coaxially with the axis of rotation A. In other implementations, the drive shaft 38 may be disposed parallel with (e.g., offset from) or transverse to the axis of rotation A. The axis of rotation A defines an axial direction B. The axial direction B is typically a vertical direction with respect to the support surface on which the lawn mower 12 rides, e.g., up and down with respect to gravity, when the lawn mower 12 is in use. However, in certain implementations, the axis of rotation A may be tilted relative to the vertical direction, for example by 1 to 10 degrees, preferably by 3 to 8 degrees, and more preferably by 5 to 6 degrees. In certain implementations, the axis of rotation A may be tilted forward in the travelling direction relative to the vertical direction. Said tilt may be achieved by tilting the motor 36, or tilting the blade 34, or tilting the blade 34 and the motor 36.

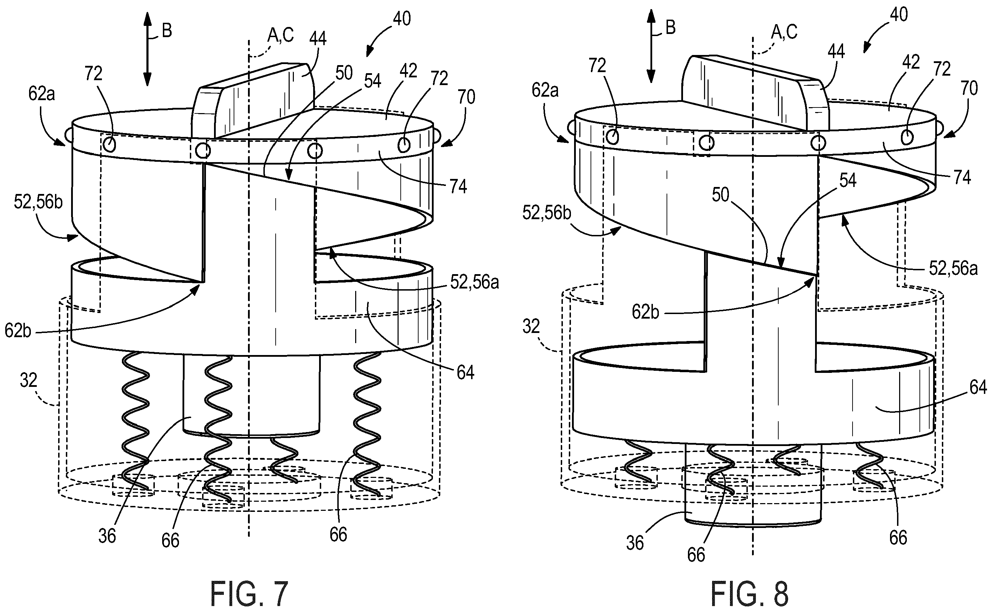

The cutting module 30 also includes a height adjustment mechanism 40 (Figs. 3-8) for moving the blade 34 at least partially up and down in the axial direction B ("at least partially" meaning the blade 34 has at least a component of movement in said direction, which may be vertical or tilted, but may or may not additionally move in other directions). The height adjustment mechanism 40 includes a manual actuator 42 configured to move in response to manual actuation by an operator. The manual actuator 42 is accessible to the operator's hand from outside the lawn mower 12 for manual engagement, as illustrated in Fig. 1. For example, the manual actuator 42 includes a grip surface 44, such as a tab in the illustrated implementation, that is disposed externally on the lawn mower 12 as illustrated in Fig. 1. In the illustrated implementation, the manual actuator 42 is rotatable about the axis of rotation A of the blade. However, in other implementations, the manual actuator 42 may be rotatable about a different axis, which may be parallel to or transverse to the axis of rotation A of the blade. The blade 34 is configured to move in the axial direction B in response to movement of the manual actuator 42, as will be described in greater detail below. In the illustrated implementation, the blade 34 is movable about 1.57 inches (40 mm) in the axial direction B between a raised position (Fig. 7) in which the blade 34 is fully raised and a lowered position (Fig. 8) in which the blade 34 is fully lowered. The blade 34 is movable at least 1.5 inches (38.1 mm) in the axial direction B in some implementations, and may be movable at least 1.57 inches (40 mm), and may be movable more than 1.57 inches (40 mm) in the axial direction B in some implementations. In certain implementations, the cutting height (height from blade to ground) changes between around 1.96 inches (50mm) and 3.54 inches (90mm). In certain implementations, the cutting height changes between 0.78 inches (20mm) and 2.36 inches (60mm).

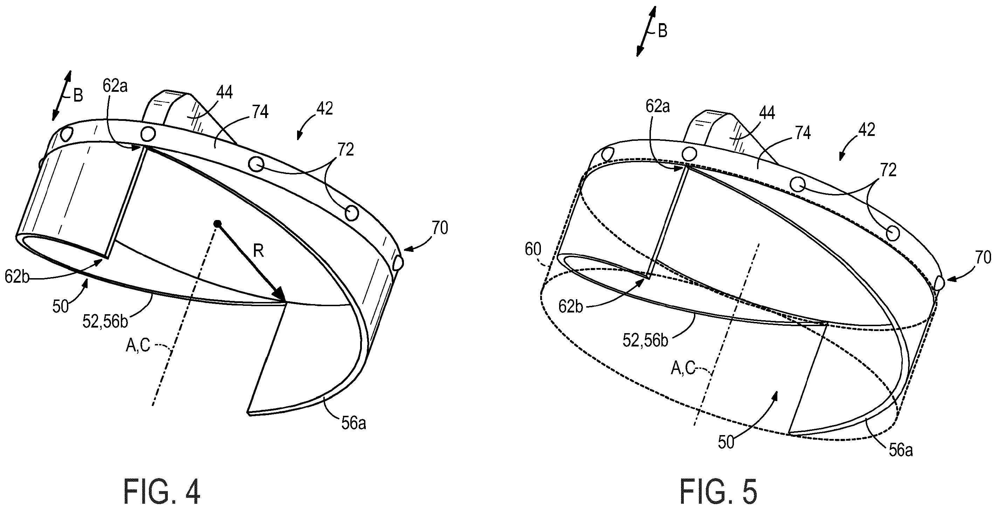

The manual actuator 42 is operably coupled to a cam interface 50 (see Figs. 3-5). The cam interface 50 includes a cam surface 52 and a follower surface 54. In the illustrated implementation, the cam surface 52 is rotatable and the follower surface 54 translates. The cam interface 50 is at least partially helical. In the illustrated implementation, the cam surface 52 includes two helical surfaces 56a, 56b, each extending 180 degrees about the axis of rotation A and having the same cam profile. In other implementations, the cam surface 52 may have other configurations, such as one helical surface, or three or more helical surfaces. The cam surface 52 has a pitch angle of about 114.3 degrees per inch (with "about" meaning +/- 10 degrees per inch) (the pitch angle is about 4.5 degrees per mm). In some implementations, the pitch angle may be between about 50.8 degrees per inch and about 152.4 degrees per inch (between about 2 degrees per mm and about 6 degrees per mm). The cam surface 52 has a radius R (from the central axis C as shown in Fig. 4) of about 2.36 inches (with "about" meaning +/- 0.2 inches) (the radius R is about 60 mm). In other implementations, the radius R may be between about 0.78 inches and about 9.9 inches (about 20mm - 250mm), or between about 1.1 inches and about 7.9 inches (about 30mm-200mm), or between about 1.5 inches and about 5.9 inches (about 40mm-150mm), or between about 1.9 inches and about 3.9 inches (about 50mm-100mm), or between about 2.3 inches and about 3.2 inches (about 60mm-80mm). For example, the cam interface 50 is configured such that the blade 34 is displaced in the axial direction B about 1.5 inches (38 mm) or more in response to an angular range of 180 degrees of rotation of the manual actuator 42. In other implementations, the blade 34 may be displaced in the axial direction B about 1.57 inches (40 mm) or more in response to 180 degrees of rotation of the manual actuator 42. In other implementations, the cam surface 52 may be translatable rather than rotatable.

With reference to Figs. 4-5, the cam interface 50 is disposed within a cylindrical volume 60 (illustrated in Figs. 2, 4, and 5) defined circumferentially by the cam interface 50 (e.g., by the helical surfaces 56a, 56b) and bounded axially (e.g., in the axial direction B) by upper and lower distal ends 62a, 62b of the cam interface 50. In the illustrated implementation, the axis of rotation A of the blade intersects the cylindrical volume 60. In the illustrated implementation, the cylindrical volume 60 is centered with respect to the axis of rotation A, e.g., the cylindrical volume 60 defines a central axis C, and the central axis C is coaxial with the axis of rotation A of the blade. Thus, in the illustrated implementation the central axis C also defines the axial direction B. In other implementations, the axis of rotation A may be disposed in other locations that intersect the cylindrical volume 60, e.g., parallel to the central axis C or transverse to the central axis C (e.g., if the axis of rotation A is tilted as described above). In yet other implementations, the axis of rotation A may be transverse to the central axis C and need not intersect the cylindrical volume 60. In the illustrated implementation, the axis of rotation A of the blade intersects the manual actuator 42 and, more specifically, is coaxial with the manual actuator 42. Furthermore, the manual actuator 42 is rotatable about the central axis C, and therefore also about the axis of rotation A of the blade. However, in other implementations, other configurations of the manual actuator 42 are possible. For example, the central axis C need not be coaxial with the axis of rotation A of the blade and may be parallel to (offset) or transverse to the axis of rotation A of the blade in other implementations.

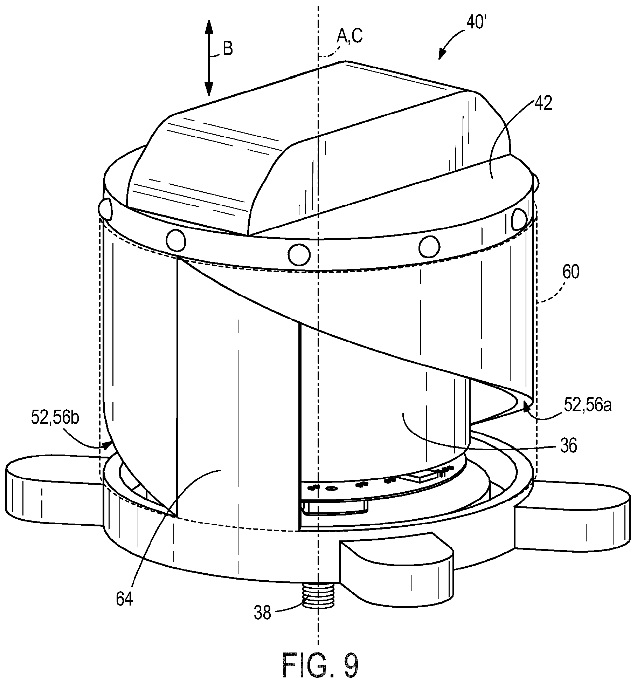

Furthermore, in the illustrated implementation of Fig. 9, the motor 36 is disposed at least partially within the cylindrical volume 60. For example, the motor 36 may be disposed partially within the cylindrical volume 60, mostly within the cylindrical volume 60, or completely within the cylindrical volume 60. Placement of the motor 36 at least partially within the cylindrical volume 60 provides a more compact height adjustment mechanism 40', especially in the axial direction B. All other aspects of the height adjustment mechanism 40' illustrated in Fig. 9 are the same as those described herein with respect to Figs. 1-8, and reference is made to the description of the height adjustment mechanism 40 in Figs. 1-8 herein and need not be repeated.

Returning to the implementation of Figs. 1-8, the height adjustment mechanism 40 includes a motor mount 64 (Figs. 3, 7, and 8) configured to support the motor 36 in a generally fixed relation thereto, which may include a degree of movement or damping to adapt to vibrations, external force, etc., or may be rigidly fixed to the height adjustment mechanism 40. The motor mount 64 is axially slidable, in the axial direction B, with respect to the cutting module mount 32. The motor mount 64 may be fixed against rotational movement with respect to the deck 14 such that the motor mount 64 is configured to translate in the axial direction B without rotation with respect to the deck 14. The motor mount 64 is movable between the raised position (Fig. 7) in which the blade 34 is fully raised and the lowered position (Fig. 8) in which the blade 34 is fully lowered. In the illustrated implementation, the motor mount 64 also supports the drive shaft 38 and the blade 34 in fixed relation therewith such that the motor mount 64, the motor 36, the drive shaft 38, and the blade 34 move together as one unit in the axial direction B in response to movement of the manual actuator 42.

In the illustrated implementation, the motor mount 64 includes at least a portion of the cam interface 50. The motor mount 64 is operatively coupled to the follower surface 54. As illustrated, the motor mount 64 includes the follower surface 54 in fixed relation thereto, such that the motor mount 64 and the follower surface 54 translate together as one unit. Furthermore, the manual actuator 42 is rotatable and also includes at least a portion of the cam interface 50. The manual actuator 42 is operatively coupled to the cam surface 52. As illustrated, the manual actuator 42 includes the cam surface 52 in fixed relation thereto, such that the manual actuator 42 and the cam surface 52 rotate together as one unit. Thus, in the illustrated implementation, the cam interface 50 includes (i.e., is at least partially defined by) direct engagement between the manual actuator 42 and the motor mount 64. However, in other implementations, the cam interface 50 is disposed operatively between the manual actuator 42 and the motor mount 64 such that movement of the manual actuator 42 imparts movement to the motor mount 64 with respect to the deck 14 directly or indirectly. In other implementations, the manual actuator 42 may be configured to move a blade mount (not shown, but essentially the same as the motor mount 64) such that the blade 34 is configured to move in the axial direction B with respect to the drive shaft 38 (which remains stationary with respect to the deck 14) in response to movement of the manual actuator 42 without the motor 36 moving with respect to the deck 14.

The height adjustment mechanism 40 also includes one or more biasing members 66 (Figs. 3, 7, and 8), such as coil springs (as illustrated), one or more leaf springs, one or more cup springs, or the like, for biasing the motor mount 64 upwards in the axial direction B (away from the support surface). The one or more biasing members 66 restore the motor mount 64 to its highest position (the raised position) shown in Fig. 7. Specifically, the one or more biasing members 66 are disposed between the cutting module mount 32 and the motor mount 64. In the illustrated implementation, the one or more biasing members 66 are each in direct engagement with the cutting module mount 32 and the motor mount 64; however, indirect engagement may be employed in other implementations. The one or more biasing members 66 allow the cutting module 30 to float with respect to the deck 14, and may therefore allow for movement of the cutting module 30 in more than just the axial direction B.

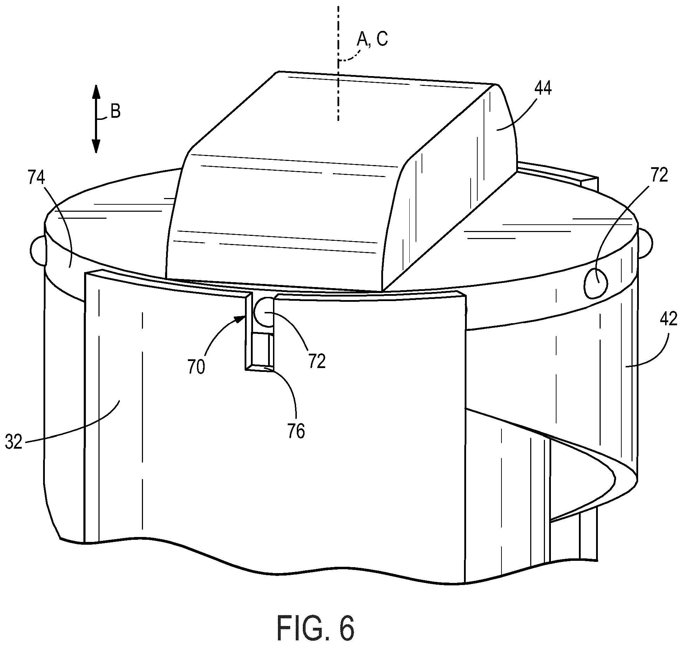

With reference to Figs. 3 and 6, the height adjustment mechanism 40 also includes a detent mechanism 70 operatively coupled to the manual actuator 42 for producing audible and/or tactile feedback and to retain the manual actuator 42 in a plurality of discrete angular positions. Markings (not shown), such as height indicators, may be provided at predetermined intervals of rotation of the manual actuator 42 corresponding to different cutting heights. The manual actuator 42 is also retained at a fixed height (in the axial direction B) with respect to the deck 14 as the manual actuator 42 rotates. In the illustrated implementation, the detent mechanism 70 includes spring-biased balls 72 disposed about a circumference of the manual actuator 42 and extending radially from an outer circumferential surface 74 of the manual actuator 42. The spring-biased balls 72 are biased radially outwards from the outer circumferential surface 74 towards the cutting module mount 32. The illustrated detent mechanism 70 includes ten spring-biased balls 72 arranged at 36 degree intervals around the outer circumferential surface 74; however, any number and spacing of one or more spring-biased balls 72 (or other detent mechanisms) may be employed in other implementations. The detent mechanism 70 engages the cutting module mount 32 and registers in an aperture 76 on the cutting module mount 32. The aperture 76 on the cutting module mount 32 may include a notch (as illustrated), a recess, a groove, a pocket, or the like. In the illustrated implementation, the cutting module mount 32 includes two apertures 76 that are diametrically opposed; however, in other implementations the cutting module mount 32 may include any number of one or more apertures 76 arranged in any suitable fashion for engagement with the detent mechanism 70. In yet other implementations, the detent mechanism 70 may be disposed on the cutting module mount 32 and the one or more apertures 76 may be disposed on the manual actuator 42.

The cutting module 30 also includes a guard 80 (Fig. 2) covering a portion of the blade 34. In the illustrated implementation, the guard 80 is disposed below the blade 34 in the axial direction B, i.e., closer to the support surface than the blade 34. However, in other implementations, the guard 80 may have any suitable configuration for covering a portion of the blade 34 and may cover portions of the blade 34 on a bottom of the blade 34, around circumferential sides of the blade 34, and/or over the blade 34, in any combination. In the illustrated implementation, the guard 80 is configured to move up and down with blade 34 in the axial direction B, in fixed relation therewith, in response to movement of the manual actuator 42. However, in other implementations, the guard 80 may remain fixed with respect to the deck 14 as the blade 34 is adjusted.

The cutting module 30 is modular and can be removed from the lawn mower 12 as a unit and replaced as a unit.

With reference to Figs. 1 and 2, the charging station 48 includes a docking pad 82 and a battery charging terminal 84. The docking pad 82 defines a generally planar surface 86, with "generally planar surface" being defined as providing enough of a portion of a planar surface, i.e., comprised of a single continuous surface or a plurality of separated (discontinuous) surfaces, for the lawn mower 12 to drive up onto and be supported by during a charging operation. The battery charging terminal 84 is configured to engage with the battery charging contact 26 on the lawn mower 12 to provide an electrical connection therebetween for charging the power source 24 (e.g., battery).

In operation, blade height adjustment may be achieved manually by an operator. The operator engages the grip surface 44 of the manual actuator 42 and moves the manual actuator 42 (e.g., rotates the manual actuator 42 in the illustrated implementation). At predefined angular intervals, as defined by the detent mechanism 70, the operator hears and/or feels feedback from the manual actuator 42. The manual actuator 42 may be held in one of the discrete angular positions by the detent mechanism 70 to retain the blade 34 at a corresponding height. For each angular interval of rotation of 36 degrees, the blade height changes by about 0.314 inches (8 mm) (or more in some implementations). The blade height changes by at least 1.5 inches (38 mm) or more in response to the manual actuator 42 being rotated 180 degrees. The operator rotates the manual actuator 42 in a first direction (e.g., clockwise) to lower the blade 34 and in a second direction (e.g., counterclockwise) to raise the blade 34. The biasing members 66 provide a force to return the blade 34 towards the raised position when the manual actuator 42 is rotated in the second direction.

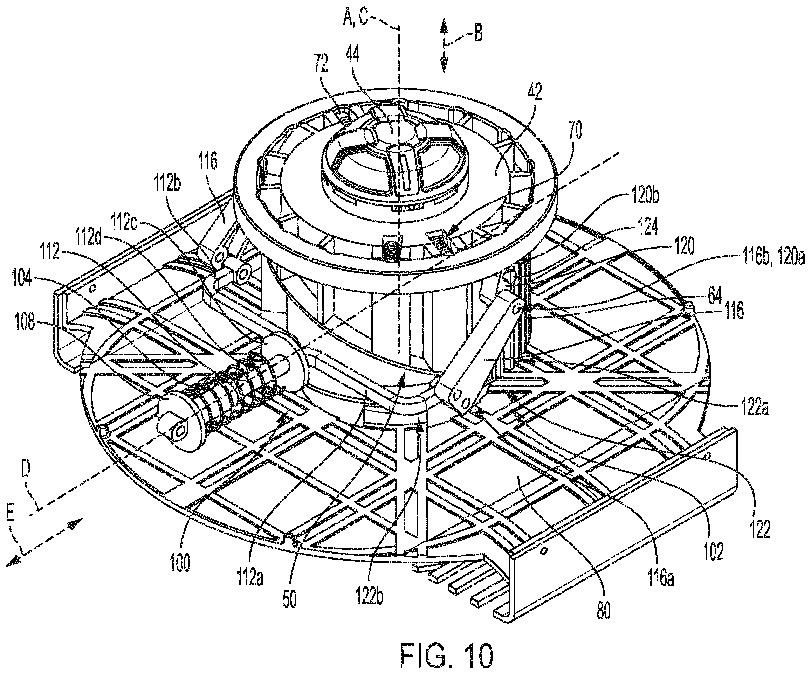

Figs. 10-12 illustrate an implement height adjustment mechanism 100 in accordance with the present invention (which may also be referred to herein as a blade height adjustment mechanism 100) for use with the garden tool 12. The implement height adjustment mechanism 100 is configured to adjust the height of the implement (which may include any of the implements described above with respect to Figs. 3-9), such as the blade 34 or any non-blade implement. While the blade 34 is illustrated in Figs. 10-12 and described below, the blade 34 is only one example of an implement that could be employed with the disclosure of Figs. 10-12 and should not be regarded as limiting.

The blade height adjustment mechanism 100 includes similar components to the blade height adjustment mechanism 40, 40' described above. Like parts are labeled with like reference numerals and need not be described again as reference is made to their description above. Differences are described below. For example, the blade height adjustment mechanism 100 includes the manual actuator 42, the motor mount 64, and the cam interface 50 between the manual actuator 42 and the motor mount 64. However, the manual actuator 42 may be electronically actuatable in some implementations. As with the blade height adjustment mechanism 40, 40', the blade height adjustment mechanism 100 may include the grip surface 44 provided on the manual actuator 42, or may include an interface (not shown) for receiving transmission from a servomotor to control the blade height. The height adjustment mechanism 100 may include a similar detent mechanism 70 including spring biased balls 72. Other aspects may be similar between the blade height adjustment mechanisms 40, 40', 100, as would be appreciated by one of skill in the art in view of the above description of the height adjustment mechanisms 40, 40'. For example, the actuator 42 remains rotatable about the axis of rotation A of the blade 34 for the height adjustment mechanism 100. Optionally, the motor 36 is disposed within the motor mount 64 in the height adjustment mechanism 100. However, the motor 36 may be otherwise disposed and remain capable of providing torque to the blade 34.

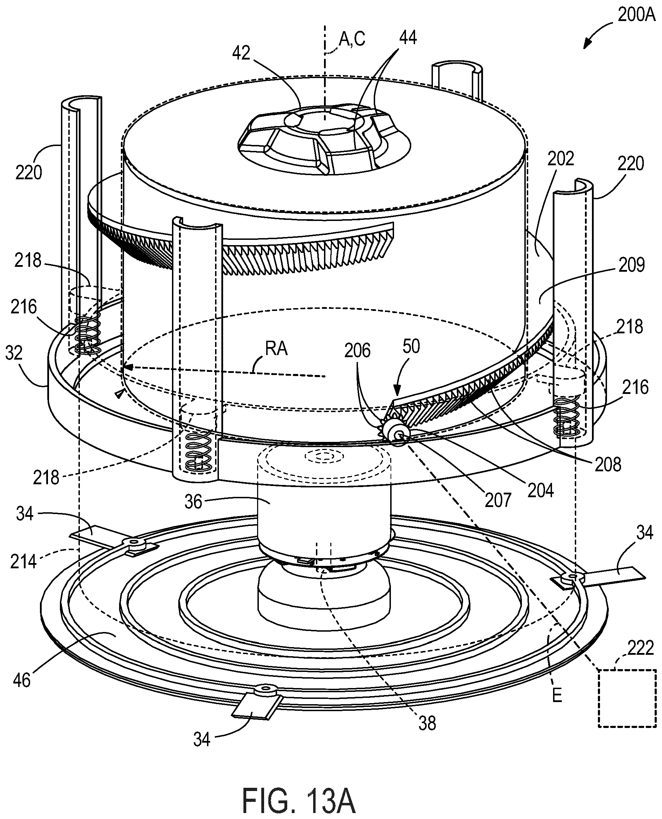

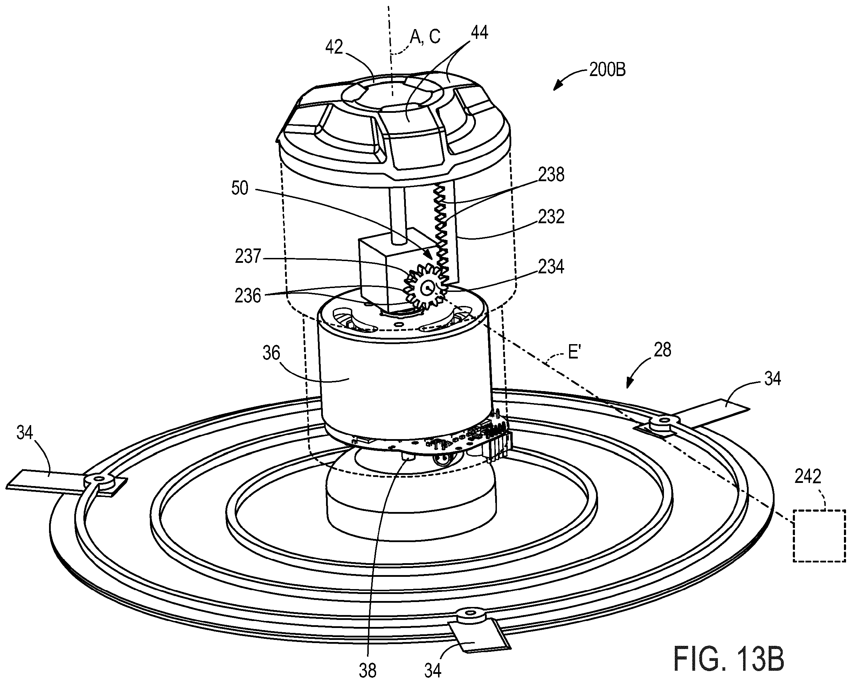

Figs. 13A and 13B illustrate the gear and rack interfaces 200A, 200B. More specifically, Fig. 13A illustrates a spiral rack-bevel gear interface 200A. The spiral rack-bevel gear interface 200A includes a spiral rack 202 and a bevel gear 204. The bevel gear 204 includes bevel teeth 206 and a bevel shaft 207. The bevel gear 204 is rotatable about a gear shaft axis E defined by the bevel shaft 207. In the illustrated implementation, the spiral rack 202 is rotatable about the central axis C and the bevel gear 204 translates axially with respect to the central axis C while being rotatable about the gear shaft axis E. The spiral rack 202 is at least partially helical about the central axis C and includes a plurality of rack teeth 208 configured to mesh with bevel teeth 206 on the bevel gear 204. In the illustrated implementation, the manual actuator 42 is rotatable about the central axis C, which is coincident with the axis of rotation A. Thus, in the illustrated implementation the central axis C also defines the axial direction B. However, in other implementations, the central axis C and the axis of rotation A need not be coincident and may be offset (parallel), or transverse, to each other.

In the illustrated implementation, the spiral rack 202 includes a helical surface 209 extending 360 degrees about the central axis C. The rack teeth 208 protrude from the helical surface 209. In other implementations, the helical surface 209 may have other configurations. For example, the helical surface 209 may extend less than 360 degrees about the central axis C to increase the pitch. As another example, the helical surface 209 may be broken into two separate helical surfaces extending 180 degrees each about the central axis C, or three separate helical surfaces extending 120 degrees each about the central axis C, etc., and a corresponding number of bevel gears 204 may be employed. The pitch angle and size of a radius RA of the helical surface 209 may be sized in accordance with a desired travel of the spiral rack-bevel gear interface 200A.

In the illustrated implementation, the bevel gear 204 is rotatably coupled to the motor mount 214 by way of the bevel shaft 207. The manual actuator 42 is operatively coupled to the spiral rack 202. As illustrated, the manual actuator 42 is fixed to the spiral rack 202, such that the manual actuator 42 and the spiral rack 202 rotate together as one unit. However, in other implementations, an intermediate transmission may be disposed between the manual actuator 42 and the spiral rack 202. In other implementations, the bevel gear 204 may be driven by a servomotor 222 which is illustrated schematically in Fig. 13A. In yet other implementations, the servomotor 222 may be configured to drive the spiral rack 202.

The spiral rack-bevel gear interface 200A includes one or more biasing members 216, such as coil springs (as illustrated), one or more leaf springs, one or more cup springs, any other type of spring or resilient member, or the like, for biasing the motor mount 214 upwards in the direction of the central axis C (away from the support surface). The one or more biasing members 216 restore the motor mount 214 to its highest position (the raised position). Specifically, each of the one or more biasing members 216 is disposed between the cutting module mount 32 and the motor mount 214. Even more specifically, each of the one or more biasing members 216 is disposed between a lobe 218 of the motor mount 214 and the cutting module mount 32, and each of the one or more biasing members 216 is received in the respective track 220. In the illustrated implementation, the one or more biasing members 216 are each in direct engagement with the cutting module mount 32 and the motor mount 214; however, indirect engagement may be employed in other implementations. The one or more biasing members 216 allow the spiral rack-bevel gear interface 200A to float with respect to the deck 14, and may therefore allow for movement of the spiral rack-bevel gear interface 200A in more than just the direction of the central axis C.

Fig. 13B illustrates a linear rack-circular gear interface 200B including a linear rack 232 and a circular gear 234. The circular gear 234 includes gear teeth 236 and a gear shaft 237. The manual actuator 42 may be rotatable about the central axis C and is operably coupled to the circular gear 234. The circular gear 234 is rotatable about a gear shaft axis E' defined by the gear shaft 237 in response to manual actuation of the manual actuator 42. The linear rack 232 includes rack teeth 238 arranged generally linearly. The rack teeth 238 are configured to mesh with the gear teeth 236 such that rotation of the circular gear 234 causes linear motion of the linear rack 232, e.g., in the direction of the central axis C or in other linear directions in other implementations. The motor mount 214 may be coupled to the linear rack 232 such that the motor mount 214 moves with the linear rack 232. All components supported by the motor mount 214 (as described above with respect to Fig. 13A) also move with the linear rack 232. In the illustrated implementation, the linear rack 232 and the motor mount 214 move in the direction of the central axis C; however, the motor mount 214 may move in other directions in other implementations.

In some implementations, the circular gear 234 may be driven by a servomotor 242, which is illustrated schematically in Fig. 13B. In yet other implementations, the servomotor 242 may be configured to drive the linear rack 232.

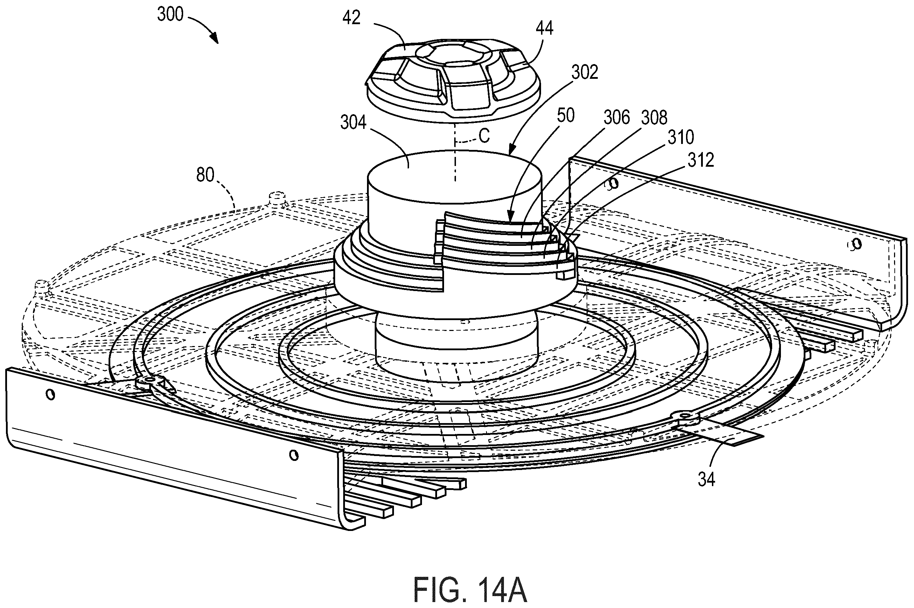

Figs. 14A-14E illustrate the nested sleeve interface 300. The nested sleeve interface 300 includes a plurality of nesting ramps 302 (which may also be referred to as nesting telescoping ramps 302, or telescoping ramps 302, herein). The manual actuator 42 is operably coupled to the nesting ramps 302. The nesting ramps 302 are collapsible onto and into one another along or parallel to respect to the central axis C. In the illustrated implementation, the nested sleeve interface 300 includes a first ramp 304, a second ramp 306, a third ramp 308, a fourth ramp 310, and a fifth ramp 312. The manual actuator 42 is coupled to the first ramp 304 such that rotation of the manual actuator 42 about the central axis C causes rotation of the first ramp 304 about the central axis C. The manual actuator 42 is coupled directly to the first ramp 304; however, in other implementations, the manual actuator 42 may be coupled indirectly to the first ramp 304 or may be coupled directly to any of the other nesting ramps 302.

The first ramp 304 may be mounted with respect to the deck 14 for rotation about the central axis C. The first ramp 304 may be fixed with respect to the deck 14 in the axial direction of the central axis C. In some implementations, the manual actuator 42 may be mounted with respect to the deck 14 for rotation about the axis C and is fixed with respect to the deck in the axial direction of the axis C; in turn, the first ramp 304 may be mounted fixedly to the manual actuator 42 for movement therewith.

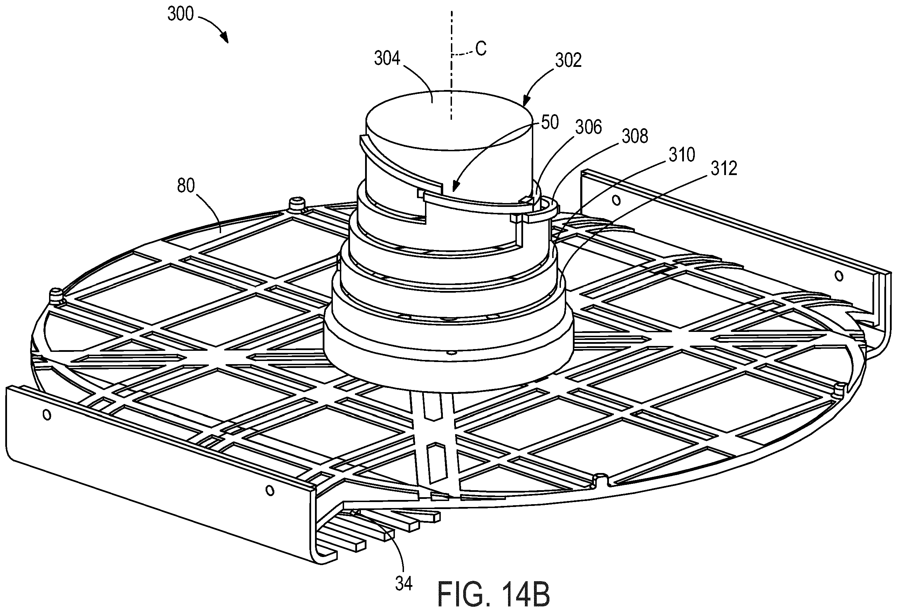

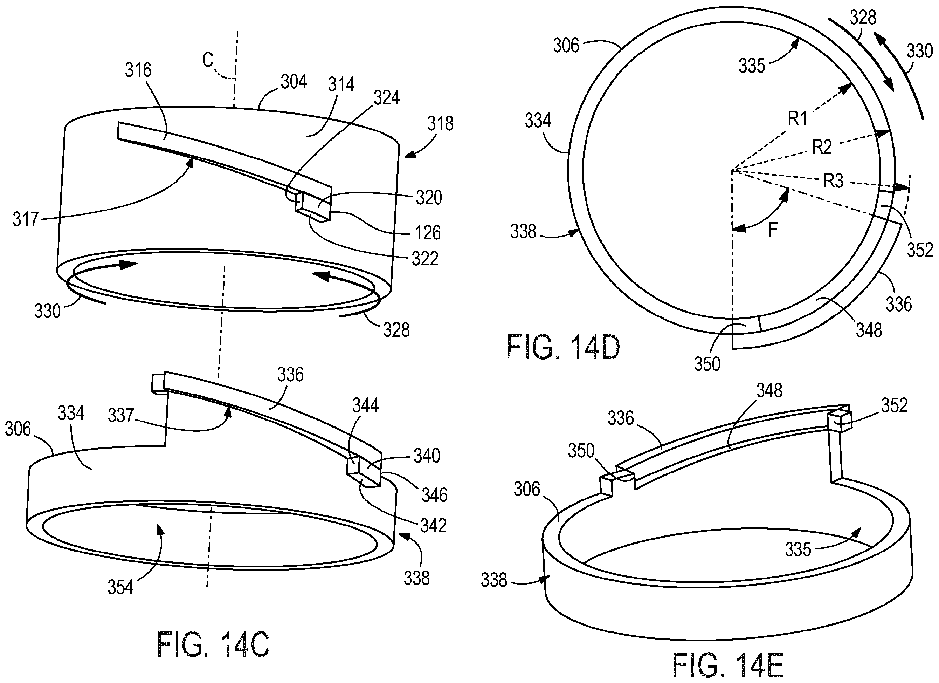

Figs. 14C-14E illustrate an example of the height adjustment interface 50 between the first ramp 304 and the second ramp 306. Similar interfaces 50 are present between the remainder of the nesting ramps 302. With reference to Fig. 14C, the first and second ramps 304, 306 are illustrated exploded from each other. The first ramp 304 includes an annular portion 314 and a helical projection 316 having a helical surface 317. The annular portion 314 is annular about the axis C. The helical projection 316 projects radially from an outer cylindrical surface 318 of the annular portion 314. A first radial distance R1 (Fig. 14D) is defined by the outer cylindrical surface 318, and a second radial distance R2 (Fig. 14D) is defined by the helical projection 316 at its farthest from the axis C. The helical projection 316 extends radially from the radial distance R1 to the radial distance R2. The helical projection 316 extends circumferentially about the axis C through an arc angle F (Figs. 9 and 14) of about 70 degrees. "About" should be understood to mean +/- 10 degrees in the context of degrees. Other arc angles F are possible. The helical projection 316 is also ramped in the axial direction of the central axis C. The helical projection 316 may have an angular pitch of about 182.9 degrees per inch (7.2 degrees per mm). Other angular pitches are possible.

The second ramp 306 also includes a follower 340 projecting from the outer cylindrical surface 338 and having a follower surface 342 that is offset from the helical projection 336, e.g., spaced from the helical projection 336 in the axial direction of the central axis C. The follower surface 342 may be helical and may have the same pitch as the helical projection 316 described above. The follower 340 also includes a deployment stop surface 344 and a retraction stop surface 346. A normal to the deployment stop surface 344 projects in the first direction 328 of rotation about the central axis C, and a normal to the retraction stop surface 346 projects in the second direction 130 of rotation about the central axis C.

Figs. 14D-14E illustrate the second ramp 306. As best illustrated in Fig. 14E, the second ramp 306 defines a helical track 348 (which may also be referred to herein as a helical surface 348). The helical track 348 extends radially between the inner and outer cylindrical surfaces 335, 338 from the radial distance R1 to the radial distance R2, as best illustrated in Fig. 14D. The helical track 348 extends circumferentially about the central axis C through approximately the arc angle F and is bounded circumferentially by a deployment stop 350 and a retraction stop 352. The helical track 348 is configured to engage the follower 320. The follower 320 is configured to move along the helical track 348 between the deployment stop 350 and the retraction stop 352. The deployment stop 350 is configured to engage the deployment stop surface 324. The retraction stop 352 is configured to engage the retraction stop surface 326. The helical track 348 may have the same angular pitch as the helical projection 316 described above.

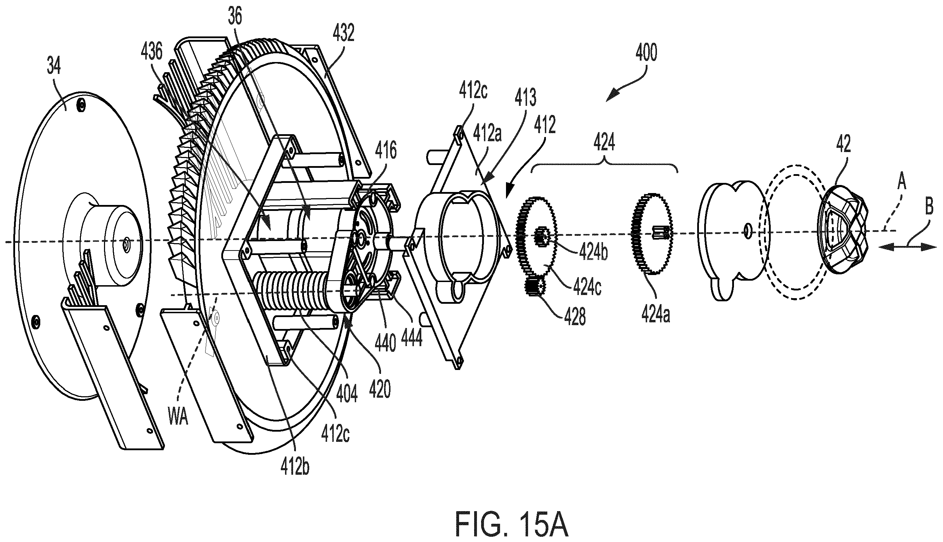

Figs. 15A-15C illustrate the worm shaft interface 400. As shown in Fig. 15A, the worm shaft interface 400 includes a bracket 412 fixedly coupled to the deck 14, a mount 416 movably coupled to the bracket 412, and a worm shaft 404 extending between and configured to transmit force between the bracket 412 and the mount 416.

The bracket 412 includes an upper plate 412a, a lower plate 412b axially spaced from the upper plate 412a along the axial direction B, and a plurality of channels 444 extending between the upper plate 412a and the lower plate 412b. The bracket 412 also at least partially encloses a void or volume 436 between the top plate 412a, the bottom plate 412b, and channels 444.

The channels 444 of the bracket 412 extend generally parallel to the axis of rotation A and are configured to act as guides for the mount 416. More specifically, the bracket 412 includes three channels 444 each positioned along the exterior of the plates 412a, 412b at 90-degree intervals from each other. In the illustrated implementation, the channels 444 are each generally C-shaped having an open end that faces inwardly toward the axis of rotation A. During use, the channels 444 are sized and shaped to receive a portion (e.g., a corresponding projection 440) of the mount 416 therein. While the illustrated channels are C-shaped, it is understood that other shapes, geometries, and orientations channels 444 may be used.

In some implementations, the channels 444 of the bracket 412 may also include a dampening material applied thereto to dampen or otherwise reduce the transmission of vibrations between the mount 416 and the bracket 412. More specifically, the interface between the channels 444 and the projection 440 of the mount 416 may be lined with a foam, rubber, or other dampening materials. In still other implementations, the projections 440 may be coated or even formed from a dampening material to reduce the transmission of vibrations between the mount and the bracket 412. For example, the projections 440 may be formed from or coated in rubber, foam, and the like. In still other implementations, a spring or other biasing member may be present that extends between and transmits force between the projections 440 of the mount 416 and the channels 444. In such implementations, the springs or other biasing members may be configured to reduce the amount of vibrations that are transmitted between the mount 416 and the bracket 412. For example, each projection 440 may define a groove into which a spring is positioned. The spring, in turn, then engages the interior of the channel 444.

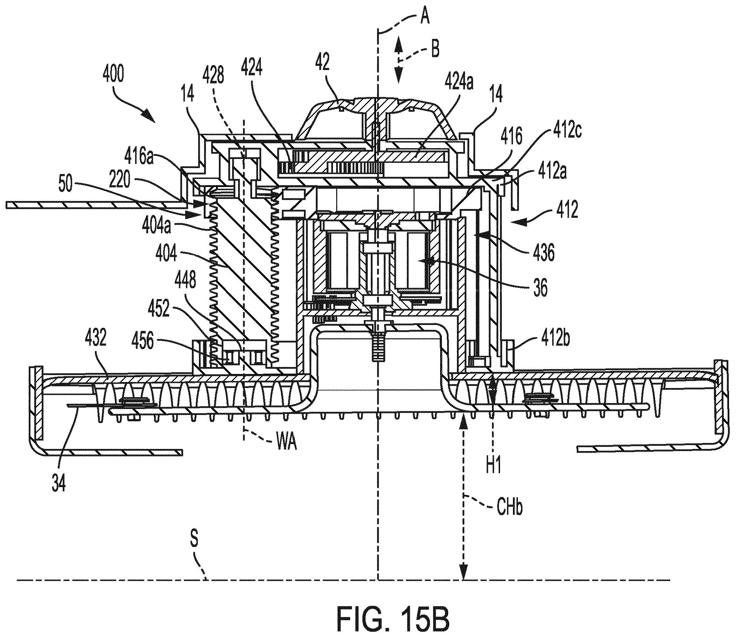

With continued reference to Fig. 15A, the upper end 413 of the bracket 412 includes a plurality of fastener receiving holes 412c. When assembled, a respective fastener (not shown) may pass through each hole 412c to fixedly secure the upper end 413 of the bracket 412 to the deck 14 (see Fig. 15B).

As shown in Fig. 15B, the worm shaft 404 of the worm shaft interface 400 extends between and is supported by both the top and bottom plates 412a, 412b for rotation with respect thereto about a worm axis WA. More specifically, the worn shaft 404 includes an elongated threaded shaft forming a helical threaded surface 404a on the exterior thereof. In the illustrated implementation, the worm axis WA is parallel to and offset from the axis of rotation A.

With continued reference to Fig. 15B, the worm shaft interface 400 includes a bearing 456 positioned and accommodating rotation between the worm shaft 404 and the bottom plate 412b of the bracket 412. More specifically, the worm shaft 404 defines a blind bore 452 in one end thereof while the worm shaft interface 400 includes a bearing standoff 448 on which the bearing 456 is mounted. In the illustrated implementation, the bearing standoff 448 and the blind bore 452 each extend along the axial direction B towards the driven gear 428.

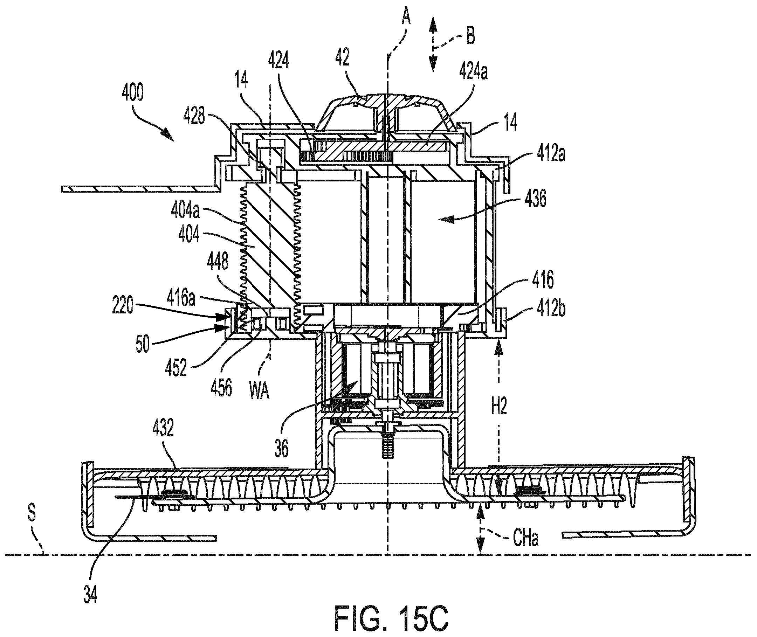

As shown in Fig. 15A, the mount 416 of the worm shaft interface 400 includes a plate-like body 418 having a plurality of projections 440 each extending outwardly therefrom. During use, the mount 416 is configured to move continuously in the axial direction B with respect to the bracket 412 between a first position (see FIG. 15B), in which the mount 416 is positioned proximate the first plate 412a of the bracket 412, and a second position (see Fig. 15C), in which the mount 416 is positioned proximate the second plate 412b. More specifically, the mount 416 is configured to be supported by the bracket 412 such that the body 418 remains substantially normal to the axis of rotation A (e.g., normal to the channels 444 and worm axis WA) as it moves between the first position and the second position.

In the illustrated implementation, the mount 416 includes three projections 440 each extending outwardly from the body 418 at 90-degree intervals from each other and substantially corresponding to the location of the channels 444 of the bracket 412. When assembled, each projection 440 is sized to be at least partially received within a corresponding channel 444 of the bracket 412 such that the projection 440 is restricted from moving laterally in the channel 444 but can slide along the length of the channel 444 in the axial direction B. In the illustrated implementation, the projections 440 are generally T-shaped to correspond with the size and shape of the open end of the channels 444.

As shown in Fig. 15A, the mount 416 also includes a threaded interface 420 configured to threadably engage the worm shaft 404. The threaded interface 420 includes an internal threaded surface 416a configured to engage the external threaded surface 404a of the worm shaft 404 such that rotation of the worm shaft 404 about the worm axis WA causes the mount 416 to move axially along the length of the shaft 404. In the illustrated implementation, the threaded interface 420 is a complete 360-degree interface. More specifically, rotating the worm shaft 404 in a first direction about the worm axis WA causes the mount 416 to travel axially toward the first position (e.g., away from the second plate 412b and toward the first plate 412a) while rotating the worm shaft 404 in a second direction opposite the first direction causes the mount 416 to travel axially toward the second position (e.g., away from the first plate 412a and toward the second plate 412b).

The mount 416 is also configured to serve as a mounting location for the cutting module 30. More specifically, the cutting module mount 432 is fixedly coupled to the mount 416 via one or more fasteners so that the module mount 432 and the mount 416 move together as a unit. Since the motor 36 is fixedly coupled to the module mount 432, the motor 36 also moves together with the mount 416 and the module mount 432.

During use, the mount 416 and the cutting module 30 are together continuously movable with respect to the bracket 412 in the axial direction B between a first or raised position (see Fig. 15B), and a second or lowered position (see Fig. 15C). More specifically, when the mount 416 and cutting module 30 are in the first position, the mount 416 is in the first position causing the blade 34 to be spaced a first vertical distance H1 from the bracket 412 defining a first cutting height CHa. In contrast, when the mount 416 and the cutting module 30 are in the second or lowered position the mount 416 is positioned in the second position causing the blade 34 to be spaced a second vertical distance H2 from the bracket 412 that is greater than the first vertical distance H1 defining a second cutting height CHb that is greater than the first cutting height CHa. Furthermore, the blade motor 36 is mounted to the module mount 432 such that the motor 36 is completely positioned within the void 436 when the worm shaft interface 400 is in the raised position and is at least partially positioned below or outside the void 436 in the lowered position.

As best illustrated in Figs. 15A-15B, the worm shaft interface 400 also includes a transmission mechanism 424 extending between and configured to transmit torque between the manual actuator 42 and the worm shaft 404. More specifically, the transmission mechanism 424 is configured to transmit torque while decreasing the mechanical advantage between the manual actuator 42 and the worm shaft 404 such that one rotation of the manual actuator 42 by the user results in multiple rotations of the worm shaft 404. In some implementations, the mechanical advantage between the manual actuator 42 and the worm shaft 404 may be such that one rotation of the manual actuator 42 causes the worm shaft 404 to rotate the necessary number of times to cause the mount 416 to move between the first position and the second position. In other implementations, the mechanical advantage may be such that some multiple of rotations of the manual actuator 42 causes the worm shaft 404 to rotate the necessary number of times to cause the mount 416 to move between the first position and the second position.

In illustrated transmission mechanism 424 is a gear train 424 including a first gear 424a coupled to and rotatable together with the manual actuator 42, a second gear 424b with a different number of teeth than the first gear 424a, a third gear 424c rotatable together with the second gear 424b, and a driven gear 428 coupled to and rotatable together with the worm shaft 404. Together, the first, second, third, and spur gears 424a, 424b, 424c, 428 form a gear train that decreases the mechanical advantage between the manual actuator 42 and the worm shaft 404 such that one rotation of the manual actuator 42_by the user results in multiple rotations of the worm shaft 404. While the illustrated implementation includes four gears forming a gear train, it is understood that in other implementations more or fewer gears may be used.

In the illustrated implementation, the gears 424a-424c of the gear train 424 are each spur gears, and the driven gear 428 is also a spur gear. It is envisioned that any number of the gears 424a-424c and the drive gear 428 may be other types of gears, for example, bevel gears. In the illustrated implementation, each of the gears 424a-424c as well as the driven gear 428 rotate about an axis parallel to the rotation axis A. Furthermore, while the illustrated transmission mechanism 424 includes a series of gears to convey torque and produce the desired mechanical advantage, it is understood that in other implementations other forms of conveyance could be used such as but not limited to pulleys and belts, cammed surfaces, and the like.

To increase the cutting height CH of the blade 34 of the lawn mower 12, the user applies a manual actuation force to the manual actuator 42. More specifically, the applies a torque to the manual actuator 42 in a first direction causing it to rotate with respect to the deck 14. The torque applied by the user is transmitted to the worm shaft 404 via the gear train 424 causing the worm gear 404 to rotate with respect to the bracket 412 in a first direction. As discussed above, the rotation of the worm gear 404 in the first direction causes the mount 416 and cutting module 30 to move together as a unit toward the first plate 412a. This motion, in turn, causes the distance H1 between the blade 34 and the bracket 412 to decrease and the cutting height CH to increase.

To reduce the cutting height CH of the blade 34 of the tool 12, the user applies a torque to the manual actuator 42 in a second direction opposite the first direction. The torque, in turn, causes the manual actuator 42 to rotate with respect to the deck 14 where it is transmitted to the worm shaft 404 via the gear train 424 causing the worm gear 404 to rotate with respect to the bracket 412 in a second direction opposite the first direction. As discussed above, the rotation of the worm gear 404 in the second direction causes the mount 416 and cutting module 30 to move together as a unit toward the second plate 412b. This motion, in turn, causes the distance H2 between the blade 34 and the bracket 412 to increase and the cutting height CH to decrease.

With reference to Figs. 3-9, as mentioned above, the biasing members 66 of the blade height adjustment mechanism 40, 40' are disposed between the cutting module mount 32 and the motor mount 64. In contrast, with reference to Fig. 10, the blade height adjustment mechanism 100 includes a biasing member 104 not disposed axially between the manual actuator 42 and the motor mount 64. Rather, the biasing member 104 is disposed laterally to the side of the manual actuator 42 and the motor mount 64 (e.g., laterally with respect to the axial direction B). This permits the blade height adjustment mechanism 100 to be compact and take up less space in the axial direction B when compared to the blade height adjustment mechanism 40, 40'. In the illustrated implementation, the biasing member 104 may include a compression spring. Other biasing members are possible, such as a tensile spring(s), a torsion spring(s), a biased lever(s), a cup spring(s), an elastic material(s), a resilient material(s), a piston and cylinder (e.g., hydraulic, pneumatic, etc.), a damper, any combination thereof, and the like.

The blade height adjustment mechanism 100 includes a lateral support mechanism 102 illustrated herein, configured to support the motor mount 64 and thus the blade 34 at a desired cutting height relative to the support surface S.

With respect to the illustrated implementation, the crank-and-rod mechanism 102 may have any suitable arrangement, construction, shape, and/or quantity of one or more cranks, one or more rods, and one or more biasing members, as will be described in greater detail below, and which would be appreciated by one of ordinary skill the art. The crank-and-rod mechanism 102, which includes the biasing member 104 (and which may also be referred to herein as a biased crank-and-rod mechanism 102), is disposed laterally to the side of the manual actuator 42 and the motor mount 64 (e.g., laterally with respect to the axial direction B).

Thus, the crank-and-rod mechanism 102 further provides the advantages described above, e.g., permitting the blade height adjustment mechanism 100 to be compact and take up less space in the axial direction B when compared to the blade height adjustment mechanism 40, 40'. The crank-and-rod mechanism 102 also provides force to counteract gravitational pull on the motor mount 64 and the blade 34, reducing friction. Accordingly, the user-input force to rotate the grip surface 44 and adjust a height of the blade 34 need not overcome the gravitation force pulling on the motor mount 64 and the blade 34. Similarly, the user-input force to rotate the grip surface 44 need not overcome torque and frictional forces between components which secure the grip surface 44 to the motor mount 64. Rather, the crank-and-rod mechanism 102 applies force to the motor mount 64 to hold the motor mount 64 in a floating state in which the entire amount or nearly the entire amount of user-input force to the grip surface 44 is transmitted to adjust the height of the blade 34.

The crank-and-rod mechanism 102 includes a yoke 112. The yoke 112 includes a first yoke arm 112a, a second yoke arm 112b, a yoke plate 112c, and a yoke shaft 112d. The biasing member 104 is disposed axially between a spring receiver 108 and the yoke plate 112c. The biasing member 104 is disposed coaxially around the yoke shaft 112d. The first yoke arm 112a and the second yoke arm 112b extend laterally from the yoke shaft 112d in opposite directions. The yoke shaft 112d and the spring receiver 108 are aligned along a force axis D. The yoke 112 is movable along a spring direction E (illustrated as parallel with the force axis D) relative to the spring receiver 108. In the illustrated implementation, the yoke 112 is telescopically translatable relative to the spring receiver 108, with the yoke shaft 112d being received within the spring receiver 108. However, other arrangements are possible.

The force axis D in the illustrated implementation is transverse or non-perpendicular with the axis of rotation A and the central axis C. For example, the force axis D may be perpendicular with the axis of rotation A and the central axis C and may intersect the axis of rotation A and the central axis C, as illustrated. In other implementation, the force axis D may be non-intersecting with the axis of rotation A and the central axis C. Thus, the spring direction E is transverse or non-perpendicular with the axial direction B. As one example, the illustrated spring direction E may be perpendicular with the axial direction B.

Each of the yoke arms 112a, 112b is pivotably coupled to a first end 116a of a respective spring linkage 116. The spring linkages 116 each further include an opposite second end 116b that is pivotably coupled to a first end 120a of a respective interface linkage 120. Each of the interface linkages 120 further includes an opposite second end 120b that is pivotably coupled to a respective interface projection 124 of the motor mount 64. The spring linkages 116 are closer to the biasing member 104 when compared to the interface linkages 120. Pins or other rotation permitting devices (not shown) may secure the yoke 112 to the respective first ends 116a of the spring linkages 116. Similarly, pins or other rotation permitting devices (not shown) may secure the respective second ends 116b of the spring linkages 116 to the respective first ends 120a of the interface linkages 120. In some implementations, more intermediate linkages (not shown) in addition to the respective spring linkage 116 and the respective interface linkage 120 may be employed

The yoke 112, the spring linkage 116, and the interface linkage 120 together form a mechanical linkage 122 configured to convert a force generated by the biasing member 104 to a holding force in the height adjustment direction (i.e., along the direction B) for supporting the blade 34. The mechanical linkage 122 includes a pivotable crank 122a (i.e., the spring linkage 116 and the interface linkage 120) and a translatable rod 122b (i.e., the yoke 112). The pivotable crank 122a (e.g., the spring linkage 116 and the interface linkage 120) and the translatable rod 122b e.g., the yoke 112) are configured to support the blade 34 for movement in a height adjustment direction, which is parallel with the axial direction B. The pivotable crank 122a may have other configurations in other implementations (e.g., other arrangements of one or more linkages), and the example illustrated and described herein should not be regarded as limiting. Similarly, the translatable rod 122b may have other configurations in other implementations (e.g., other arrangements of one or more rods, one or more yokes, etc.), and the example illustrated and described herein should not be regarded as limiting.

As a result of the above-described interconnection between the yoke 112, the spring linkage 116, and the interface linkage 120, the yoke 112 is translatable and operatively coupled to the biasing member 104 (i.e., the spring). The interface linkage 120 is pivotably coupled to the motor mount 64. The spring linkage 116 is pivotable and is pivotably coupled to the interface linkage 120 at one location and pivotably coupled to the yoke 112 at another location.

The illustrated motor mount 64 includes the interface projections 124 which respectively engage the interface linkages 120 on opposite lateral sides of a plane defined by the axis of rotation A and the force axis D. In the illustrated implementation, the interface projections 124 are diametrically opposed about the axis of rotation A. Each interface projection 124 transmits force from the respective yoke arm 112a, 112b to the motor mount 64. Other height adjustment mechanisms 100 may have other numbers of interface projections 124, and the interface projections 124 may be otherwise circumferentially spaced about the axis of rotation A.

Accordingly, the biasing member 104, the spring receiver 108, the yoke 112, the spring linkages 116, and interface linkages 120 together form the crank-and-rod mechanism 102 configured to support the motor mount 64 and thus the blade 34 at a desired cutting height relative to the support surface.

FIG. 11 illustrates a raised position of the height adjustment mechanism 100. As illustrated in FIG. 11, the spring receiver 108 is fixed with respect to the deck 14 and may be coupled directly or indirectly to the deck 14. A spring force generated by the biasing member 104 extends along the spring direction E, which is perpendicular with the axial direction B. As described above, the spring direction E is transverse (e.g., non-parallel, which includes perpendicular and non-perpendicular) relative to the axial direction B. At one end, the biasing member 104 engages the spring receiver 108, which is coupled to and/or integral with the deck 14, and at another end, the biasing member 104 engages the yoke plate 112c of the yoke 112.

The biasing member 104 thus provides a spring force in a direction at least partially perpendicular (e.g., non-parallel) to the axial direction B (which may also be referred to herein as the blade height adjustment direction B, or the height adjustment direction B). The interface linkages 120 and the spring linkages 116 are together configured to transmit the spring force of the biasing member 104 to a force in support of the motor mount 64 and thus the blade 34 in the axial direction B.

As illustrated in FIG. 11, in the raised position of the height adjustment mechanism 100, the biasing member 104 extends a first length L1 measured between the spring receiver 108 and the yoke plate 112c of the yoke 112. The first length L1 generally corresponds with a relaxed state of the biasing member 104. In the raised position, the first end 116a of the spring linkages 116 is generally aligned with the force axis D, and the second end 116b of the spring linkage 116 is disposed above the force axis D when compared to the support surface S. In other words, the spring linkage 116 extends upwardly and away from the support surface S in the raised position. Further, in this position, the second end 120b of the interface linkage 120 is generally aligned with the axis of rotation A, and the first end 120a of the interface linkage 120 is disposed closer to the biasing member 104 than the axis of rotation A. The blade 34 is disposed a height H1 from the support surface S. The height H1 is measured perpendicularly from the support surface S (i.e., parallel to the axis of rotation A).

FIG. 12 illustrates a lowered position of the height adjustment mechanism 100. In this position, the biasing member 104 is loaded and extends a second length L2 measured between the spring receiver 108 and the yoke plate 112c of the yoke 112. The second length L2 generally corresponds with a compressed state of the biasing member 104. In the lowered position (Fig. 12), the biasing member 104 is compressed an amount greater than in the raised position (Fig. 11). In other words, the length L2 is shorter than the length L1. In other implementations, the biasing member 104 may be lengthened such that the second length L2 is greater than L1. In these implementations, the biasing member 104 is still operable to provide the above-described spring force. In the lowered position, the first end 116a of the spring linkage is generally aligned with the force axis D, and the second end 116b of the spring linkage 116 is disposed below the force axis D when compared to the support surface S. In other words, the second end 116b of the spring linkage 116 extends downwardly and towards the support surface S in the lowered position. Further, in this position, the second end 120b of the interface linkage 120 is generally aligned with the axis of rotation A, and the first end 120a of the interface linkage 120 is disposed closer to the biasing member 104 than the axis of rotation A. The blade 34 is disposed a height H2 from the support surface S. The height H2 is measured perpendicularly from the support surface S (i.e., parallel to the axis of rotation A). The height H2 of the lowered position is smaller than the height H1 of the raised position. Accordingly, the blade 34 is closer to the support surface S when the height adjustment mechanism 100 is in the lowered position.

In operation, to initiate a transition between the raised position (Fig. 11) and the lowered position (Fig. 12), a user may actuate the actuator 42, or the actuator 42 may be electronically actuated. In doing so, as with the height adjustment mechanism 40, 40', the helical shape of the cam interface 50 permits rotation and translation of the motor mount 64 relative to the actuator 42. During the transition between the raised position (Fig. 11) and the lowered position (Fig. 12), the yoke 112 is translated (e.g., telescoped) relative to the spring receiver 108 to compress the biasing member 104. The interface linkage 120 is illustrated at a first intermediate position P1 (dashed lines, Fig. 11) and a second intermediate position P2 (dashed lines, Fig. 12) each being between the raised position (Fig. 11) and the lowered position (Fig. 12). In the first intermediate position P2, the first end 120a and the second end 120b of the interface linkage 120 extend in a direction parallel to the axis of rotation A. In the second intermediate position P2, the second end 120b of the interface linkage 120 is positioned on an opposite side of the axis of rotation A when compared to the biasing member 104. In contrast, in both the raised (Fig. 11) and lowered positions (Fig. 12), in which the second end 120b of the interface linkage 120 is positioned on the same side of the axis of rotation A when compared to the biasing member 104. Other arrangements are possible. Throughout the transition, the spring receiver 108 is held stationary with respect to the deck 14. Also throughout the transition, the biasing member 104 provides continuous spring force at least partially along the spring direction E. This spring force is transmitted through the yoke 112, the spring linkage 116, and the interface linkage 120 and into the interface projection 124 of the motor mount 64. The actuation force of the actuator 42 must overcome the spring force of the biasing member 104.

Once transitioned to the desired position of the blade 34 relative to the support surface S, the height adjustment mechanism 100 may be held in a desired position (i.e., cutting height) by the detent mechanism 70. In the desired position (e.g., the lowered position, Fig. 12), the spring force of the biasing member 104 is transmitted through the interface projection 124 to hold the desired position of the blade 34. The yoke 112 transmits the spring force from the biasing member 104 to the spring linkage 116, and the interface linkage 120 transmits the spring force to provide the normal force to the interface projection 124. The detent mechanism 70 can then provide at least a minimal amount of force (or more) to secure the desired height of the height adjustment mechanism 100.

In contrast with the implementation of Figs. 3-9 (i.e., the height adjustment mechanism 40), the embodiment in accordance with the present invention of Figs. 10-12 (i.e., the height adjustment mechanism 100) takes up less space in the axial direction B. As a result, the lawn mower 12, utilizing the height adjustment mechanism 100, may be smaller, more compact, and potentially more lightweight. This space savings of the height adjustment mechanism 100 is at least in part due to the positioning of the biasing member 104 such that the corresponding spring force is oriented transverse with the axial direction B, and the crank-and-rod mechanism 102 (including the biasing member 104, the crank 122a, and the rod 122b) is disposed outside the motor mount 64 in a lateral direction with respect to the axial direction B.

The scope of the present invention is solely defined by the appended claims.

Thus, the disclosure provides, among other things, a garden tool 12, such as an autonomous lawn mower, with implement height adjustment.

## Claims

1. A blade height adjustment mechanism (100) for use with a lawn mower having a deck (14) and a blade (34), the blade height adjustment mechanism (100) comprising:
an actuator (42) configured to adjust a height of the blade (34) with respect to the deck (14) in a height adjustment direction (B);
a biasing member (104) configured to provide a force for supporting the blade (34), the force defining a force axis (D) that is transverse to the height adjustment direction (B);
a mount (64) configured to support the blade (34), the mount (64) and the blade (34) configured to be adjustable with respect to the deck (14) in the height adjustment direction (B); and
a mechanical linkage (122) operatively disposed between the deck (14) and the mount (64), the blade height adjustment mechanism (100) being **characterised in that** the mechanical linkage (100) comprises:
a translatable yoke (112) operatively coupled to the biasing member (104);
a pivotable first linkage (120) coupled to the mount (64); and
a pivotable second linkage (116) coupled to the first linkage (120) and the yoke (112).

2. The blade height adjustment mechanism (100) of claim 1, wherein the mechanical linkage (122) is configured to convert the force to a holding force configured to support the blade (34) for movement in the height adjustment direction (B).

3. The blade height adjustment mechanism (100) of claim 2, wherein the mechanical linkage (122) includes a pivotable crank (122a) and a translatable rod (122b).

4. The blade height adjustment mechanism (100) according to any of the preceding claims, further comprising a cam interface (50) disposed between the actuator (42) and the blade (34), wherein the actuator (42) is a manual actuator.

5. The blade height adjustment mechanism (100) according to any of the claims 1, 2 or 4 wherein the mount (64) is a motor mount (64) configured to fixedly support a motor (36) for movement therewith, wherein the motor (36) is configured to drive the blade (34), wherein the biasing member (104) is operatively coupled to support the motor mount (64) by way of a mechanical linkage (122).

6. The blade height adjustment mechanism (100) of claim 5, wherein the mechanical linkage (122) includes a pivotable crank (122a) and a translatable rod (122b).

7. The blade height adjustment mechanism (100) according to any of the preceding claims, wherein movement of the actuator (42) about a central axis (C) causes the blade (34) to move at least 38.1 mm in the axial direction (B) per 180 degrees of rotation of the actuator (42).

8. The blade height adjustment mechanism (100) according to claim 1, further comprising a lateral support mechanism (102) configured to support the blade (34) for movement in the height adjustment direction (B), wherein the lateral support mechanism (102) includes the biasing member (104).

9. The blade height adjustment mechanism (100) of claim 8, wherein the lateral support mechanism (102) includes a portion that is translatable in a direction transverse to the height adjustment direction (B).

10. The blade height adjustment mechanism (100) of claim 8, wherein the lateral support mechanism (102) includes a pivotable crank (122a) and a translatable rod (122b).

11. The blade height adjustment mechanism (100) of claim 10, wherein the biasing member (104) is configured to bias the translatable rod (122b) in the direction transverse to the height adjustment direction (B).

12. A garden tool (12) including the blade height adjustment mechanism (100) according to any of the preceding claims, the garden tool (12) including:
the deck (14); and
an implement, such as the blade (34), for performing a garden operation.

13. A lawn mower (12) including the blade height adjustment mechanism (100) according to any of the preceding claims, the lawn mower (12) including the deck (14) and the blade (34).

## Patentansprüche

1. Mechanismus (100) zur Höhenverstellung eines Messers zur Verwendung bei einem Rasenmäher, der ein Mähdeck (14) und ein Messer (34) aufweist, wobei der Mechanismus (100) zur Höhenverstellung des Messers umfasst:
ein Betätigungselement (42), das dazu ausgelegt ist, eine Höhe des Messers (34) in Bezug auf das Mähdeck (14) in einer Höhenverstellrichtung (B) zu verstellen; und
ein Beaufschlagungselement (104), das dazu ausgelegt ist, eine Kraft zum Abstützen des Messers (34) bereitzustellen, wobei die Kraft eine Kraftachse (D) definiert, die quer zur Höhenverstellrichtung (B) verläuft;
eine Halterung (64), die dazu ausgelegt ist, das Messer (34) abzustützen,
wobei die Halterung (64) und das Messer (34) so ausgelegt sind, dass sie in Bezug auf das Mähdeck (14) in der Höhenverstellrichtung (B) verstellbar sind; und
ein mechanisches Gestänge (122), das funktionsmäßig zwischen dem Mähdeck (14) und der Halterung (64) angeordnet ist,
wobei der Mechanismus (100) zur Höhenverstellung des Messers **dadurch gekennzeichnet ist, dass** das mechanische Gestänge (122) umfasst:
einen verschiebbaren Bügel (112), der funktionsmäßig mit dem Beaufschlagungselement (104) gekoppelt ist;
ein schwenkbares erstes Gestänge (120), das mit der Halterung (64) gekoppelt ist; und
ein schwenkbares zweites Gestänge (116), das mit dem ersten Gestänge (120) und dem Bügel (112) gekoppelt ist.

2. Mechanismus (100) zur Höhenverstellung eines Messers nach Anspruch 1,
wobei das mechanische Gestänge (122) dazu ausgelegt ist, die Kraft in eine Haltekraft zum Abstützen des Messers (34) bei einer Bewegung in der Höhenverstellrichtung (B) umzuwandeln.

3. Mechanismus (100) zur Höhenverstellung eines Messers nach Anspruch 2,
wobei das mechanische Gestänge (122) eine schwenkbare Kurbel (122a) und eine verschiebbare Stange (122b) umfasst.

4. Mechanismus (100) zur Höhenverstellung eines Messers nach einem der vorstehenden Ansprüche,
ferner umfassend eine zwischen dem Betätigungselement (42) und dem Messer (34) angeordnete Nockenschnittstelle (50) umfasst, wobei das Betätigungselement (42) ein manuelles Betätigungselement ist.

5. Mechanismus (100) zur Höhenverstellung eines Messers nach einem der Ansprüche 1, 2 oder 4,
wobei die Halterung (64) eine Motorhalterung (64) ist, die dazu ausgelegt ist, einen Motor (36) fest abzustützen, um sich mit diesem mitzubewegen, wobei der Motor (36) dazu ausgelegt ist, das Messer (34) anzutreiben, wobei das Beaufschlagungselement (104) funktionsmäßig gekoppelt ist, um die Motorhalterung (64) mittels eines mechanischen Gestänges (122) abzustützen.

6. Mechanismus (100) zur Höhenverstellung eines Messers nach Anspruch 5,
wobei das mechanische Gestänge (122) eine schwenkbare Kurbel (122a) und eine verschiebbare Stange (122b) umfasst.

7. Mechanismus (100) zur Höhenverstellung eines Messers nach einem der vorstehenden Ansprüche,
wobei eine Bewegung des Betätigungselements (42) um eine Mittelachse (C) bewirkt, dass sich das Messer (34) pro 180 Grad Drehung des Betätigungselements (42) um mindestens 38,1 mm in axialer Richtung (B) bewegt.

8. Mechanismus (100) zur Höhenverstellung eines Messers nach Anspruch 1,
ferner umfassend einen seitlichen Stützmechanismus (102), der dazu ausgelegt ist, das Messer (34) bei einer Bewegung in der Höhenverstellrichtung (B) abzustützen, wobei der seitliche Stützmechanismus (102) das Beaufschlagungselement (104) umfasst.

9. Mechanismus (100) zur Höhenverstellung eines Messers nach Anspruch 8,
wobei der seitliche Stützmechanismus (102) einen Abschnitt umfasst, der in einer Richtung quer zur Höhenverstellrichtung (B) verschiebbar ist.

10. Mechanismus (100) zur Höhenverstellung eines Messers nach Anspruch 8,
wobei der seitliche Stützmechanismus (102) eine schwenkbare Kurbel (122a) und eine verschiebbare Stange (122b) umfasst.

11. Mechanismus (100) zur Höhenverstellung eines Messers nach Anspruch 10,
wobei das Beaufschlagungselement (104) dazu ausgelegt ist, die verschiebbare Stange (122b) in der Richtung quer zur Höhenverstellrichtung (B) zu beaufschlagen.

12. Gartengerät (12) mit dem Mechanismus (100) zur Höhenverstellung eines Messers nach einem der vorstehenden Ansprüche,
wobei das Gartengerät (12) umfasst:
das Mähdeck (14); und
eine Einrichtung, wie beispielsweise das Messer (34), zum Ausführen einer Gartenarbeit.

13. Rasenmäher (12) mit dem Mechanismus (100) zur Höhenverstellung eines Messers nach einem der vorstehenden Ansprüche,
wobei der Rasenmäher (12) das Mähdeck (14) und das Messer (34) umfasst.

## Revendications

1. Mécanisme (100) de réglage en hauteur d'une lame, destiné à être utilisé avec une tondeuse à gazon comportant un plateau (14) et une lame (34), le mécanisme (100) de réglage en hauteur de la lame comprenant :
un actionneur (42) conçu pour régler la hauteur de la lame (34) par rapport au plateau (14) dans une direction de réglage en hauteur (B) ; et
un élément de sollicitation (104) conçu pour fournir une force destinée à soutenir la lame (34), ladite force définissant un axe de force (D) qui est transversal à la direction de réglage en hauteur (B) ;
un support (64) conçu pour supporter la lame (34), le support (64) et la lame (34) étant conclus pour être réglables par rapport au plateau (14) dans la direction de réglage en hauteur (B) ; et
une tringlerie mécanique (122) disposée de manière fonctionnelle entre le plateau (14) et le support (64),
le mécanisme (100) de réglage en hauteur de la lame étant **caractérisé en ce que** la tringlerie mécanique (122) comprend :
un étrier translatable (112) couplé de manière fonctionnelle à l'élément de sollicitation (104) ;
une première tringlerie pivotante (120) couplée au support (64) ; et
une deuxième tringlerie pivotante (116) couplée à la première tringlerie (120) et à l'étrier (112).

2. Mécanisme (100) de réglage en hauteur d'une lame selon la revendication 1,
dans lequel la tringlerie mécanique (122) est conçue pour convertir la force en une force de maintien conçue pour supporter la lame (34) en vue d'un mouvement dans la direction de réglage en hauteur (B).

3. Mécanisme (100) de réglage en hauteur d'une lame selon la revendication 2,
dans lequel la tringlerie mécanique (122) comprend une manivelle pivotante (122a) et une tige translatable (122b).

4. Mécanisme (100) de réglage en hauteur d'une lame selon l'une des revendications précédentes,
comprenant en outre une interface à came (50) disposée entre l'actionneur (42) et la lame (34), l'actionneur (42) étant un actionneur manuel.

5. Mécanisme (100) de réglage en hauteur d'une lame selon l'une des revendications 1, 2 ou 4,
dans lequel le support (64) est un support de moteur (64) conçu pour supporter de manière fixe un moteur (36) en vue d'un mouvement avec celui-ci, le moteur (36) est conçu pour entraîner la lame (34), l'élément de sollicitation (104) est couplé de manière fonctionnelle pour supporter le support de moteur (64) au moyen d'une tringlerie mécanique (122).

6. Mécanisme (100) de réglage en hauteur d'une lame selon la revendication 5,
dans lequel la tringlerie mécanique (122) comprend une manivelle pivotante (122a) et une tige translatable (122b).

7. Mécanisme (100) de réglage en hauteur d'une lame selon l'une des revendications précédentes,
dans lequel le mouvement de l'actionneur (42) autour d'un axe central (C) provoque le mouvement de la lame (34) d'au moins 38,1 mm dans la direction axiale (B) par 180 degrés de rotation de l'actionneur (42).

8. Mécanisme (100) de réglage en hauteur d'une lame selon la revendication 1,
comprenant en outre un mécanisme de support latéral (102) conçu pour supporter la lame (34) en vue d'un mouvement dans la direction de réglage en hauteur (B), le mécanisme de support latéral (102) comprenant l'élément de sollicitation (104).

9. Mécanisme (100) de réglage en hauteur d'une lame selon la revendication 8,
dans lequel le mécanisme de support latéral (102) comprend une partie pouvant se déplacer en translation dans une direction transversale à la direction de réglage en hauteur (B).

10. Mécanisme (100) de réglage en hauteur d'une lame selon la revendication 8,
dans lequel le mécanisme de support latéral (102) comprend une manivelle pivotante (122a) et une tige translatable (122b).

11. Mécanisme (100) de réglage en hauteur d'une lame selon la revendication 10,
dans lequel l'élément de sollicitation (104) est conçu pour solliciter la tige translatable (122b) dans la direction transversale à la direction de réglage en hauteur (B).

12. Outil de jardinage (12) comprenant le mécanisme (100) de réglage en hauteur d'une lame selon l'une des revendications précédentes, l'outil de jardinage (12) comprenant :
le plateau (14) ; et
un accessoire, tel que la lame (34), destiné à effectuer une opération de jardinage.

13. Tondeuse à gazon (12) comprenant le mécanisme (100) de réglage en hauteur d'une lame selon l'une des revendications précédentes, la tondeuse à gazon (12) comprenant le plateau (14) et la lame (34).
